# EUROPEAN PATENT SPECIFICATION

(11) **EP 4 686 613 B1**
(45) Date of publication and mention of the grant of the patent: **02.12.2026**
(21) Application number: 25178265.2
(22) Date of filing: 22.05.2025
(51) Int. Cl.: B60R 9/055

(54) **IMPROVED TUBE CONTAINER FOR VEHICLES**
VERBESSERTER ROHRBEHÄLTER FÜR FAHRZEUGE
CONTENEUR TUBULAIRE POUR VÉHICULES

(30) Priority: 01.08.2024 IT 202400018058
(43) Date of publication of application: 04.02.2026
(73) Proprietor: Lokhen S.r.l., 70022 Altamura, Bari (IT)
(72) Inventor: ATLANTE, Giulio, I-70022 Altamura, BARI (IT); PASTORE, Giovanni, I-70022 Altamura, BARI (IT)
(74) Representative: Mitola, Marco

(56) References cited:
- EP-A1- 4 119 397
- WO-A1-2018/031335
- WO-A1-93/23268
- IT-A1- 202200 011 333
- SE-C2- 505 918
- US-A- 5 160 075

## Description

### FIELD OF APPLICATION

The present invention relates to an improved tube container for vehicles.

### BACKGROUND ART

As is known, in the field of both industrial and non-industrial vehicles, tube containers are used, normally placed on the roof of the vehicle, directly or by interposing luggage bars in turn attached to the roof of the vehicle.

Such tube containers must have precise technical features in order to withstand the harsh conditions to which they are subjected.

First, these are containers placed outdoors, on the roof of the vehicle, and therefore must withstand atmospheric agents, ensuring the hermeticity over time, in particular avoiding possible water infiltrations therein.

Furthermore, they must ensure considerable mechanical resistance to impacts, especially avoiding the dispersion of the objects contained therein in the event of strong decelerations of the vehicle to which they are applied (e.g., in the event of impacts or accidents that can involve the vehicle).

Moreover, these tube containers must be capable of ensuring easy accessibility to the containment compartment thereof in order to allow the removal of the objects stored therein. Furthermore, once the access to the containment compartment has been opened by rotating the appropriate closing lid, it is necessary to avoid the closing lid itself from accidentally closing, for example due to its own weight, the wind or even because the vehicle is on a slope, i.e., on a road that is not perfectly flat.

The longitudinal dimensions of tube containers can vary greatly depending on the type of vehicle with which they are associated.

For these reasons, in order to reduce production costs and avoid creating specific lengths for each type of vehicle, it is known to manufacture the tube containers in two tube parts conveniently connected to each other at the inner ends, mutually facing each other. The respective outer ends, opposite to said inner ends, are provided with caps, usually made of plastic, which act as a bottom and as an opening for the insertion of objects into the tube containers.

The connection of the inner ends of the parts, mutually facing each other, is a crucial element.

In fact, such a connection must simultaneously ensure mechanical resistance and impermeability to water or external agents.

Such a connection is mechanically stressed as it represents a cantilevered point for each part which is in turn constrained, at the opposite outer end, to a vehicle support structure, such as bars fixed to the roof of the vehicle itself, for example.

Furthermore, it is necessary for such connection joints to be easily and quickly assemblable, so as to reduce assembly times and costs.

Connection joints are known, comprising two metal half-shells, possibly covered with plastic sheets, fixed together by screws or pins.

On the one hand, such solutions ensure the necessary mechanical resistance and impermeability, but on the other hand, they are expensive to manufacture and assemble.

Therefore, the solutions of the prior art are not capable of solving the above-mentioned technical problems. WO 2018/031335 A1 is regarded as being the prior art closest to the subject-matter of claim 1, and discloses a tube container for vehicles comprising:
- a first part and a second part, both hollow, provided with an inner side wall peripherally closed so as to delimit a containment compartment for objects, said first part and second part each extending along a main longitudinal direction from a cantilevered free end to an inner end opposite to said free end, and having a centerline plane parallel to said main longitudinal direction
- a closing lid, associated with the free end of at least one of said parts, openable so as to allow access to the containment compartment, through an access threshold thereof,
- the inner ends of said parts directly facing and being connected to each other by means of at least one joining collar, so as to create a single device body, parallel to said main longitudinal direction, the joining collar being superimposed on the inner ends of the parts and on an outer side wall opposite to the inner side wall of the parts.

### OVERVIEW OF THE INVENTION

Therefore, the need is felt to solve the drawbacks and limitations mentioned with reference to the prior art.

Such a need is met by a tube container according to claim 1.

### DESCRIPTION OF THE DRAWINGS

Further features and advantages of the present invention will be more comprehensible from the following description of preferred, non-limiting embodiments thereof, in which:

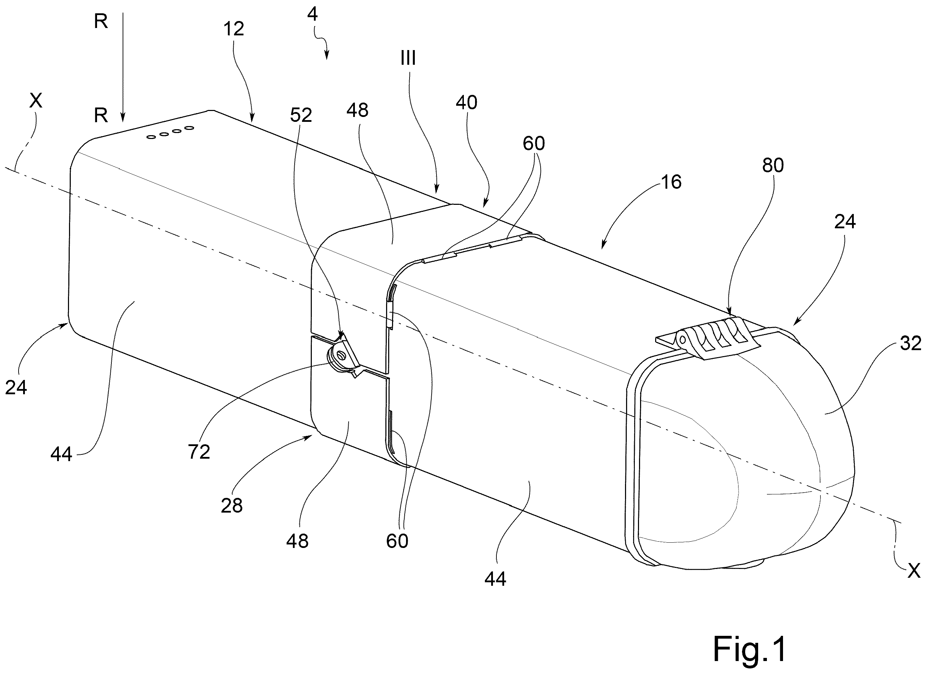

Figure 1 depicts a perspective view of a tube container for vehicles in an assembled configuration, according to an embodiment of the present invention;

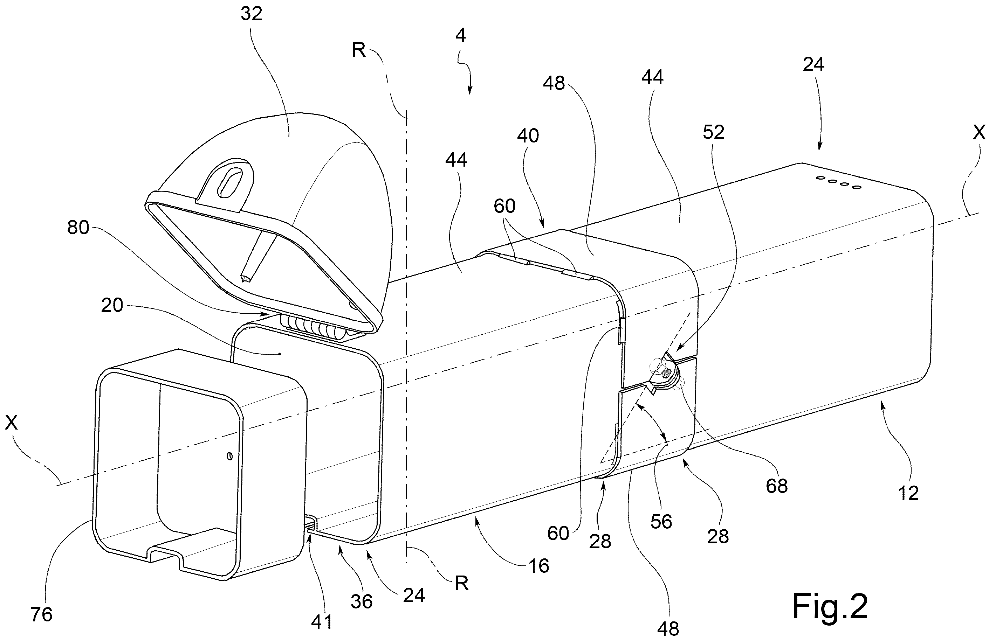

Figure 2 depicts the tube container in Figure 1, in a partially exploded configuration and with the lid open;

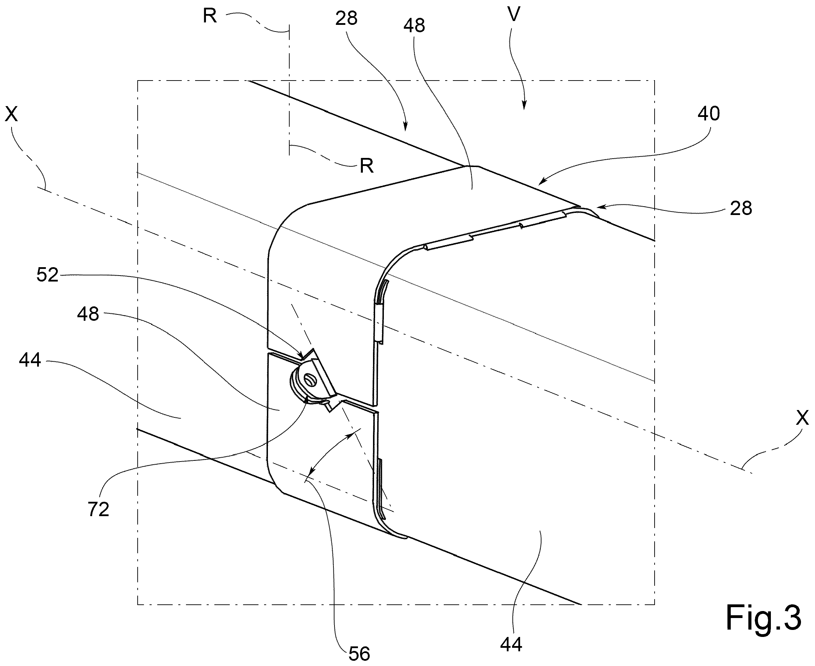

Figure 3 depicts the enlarged detail III of Figure 1;

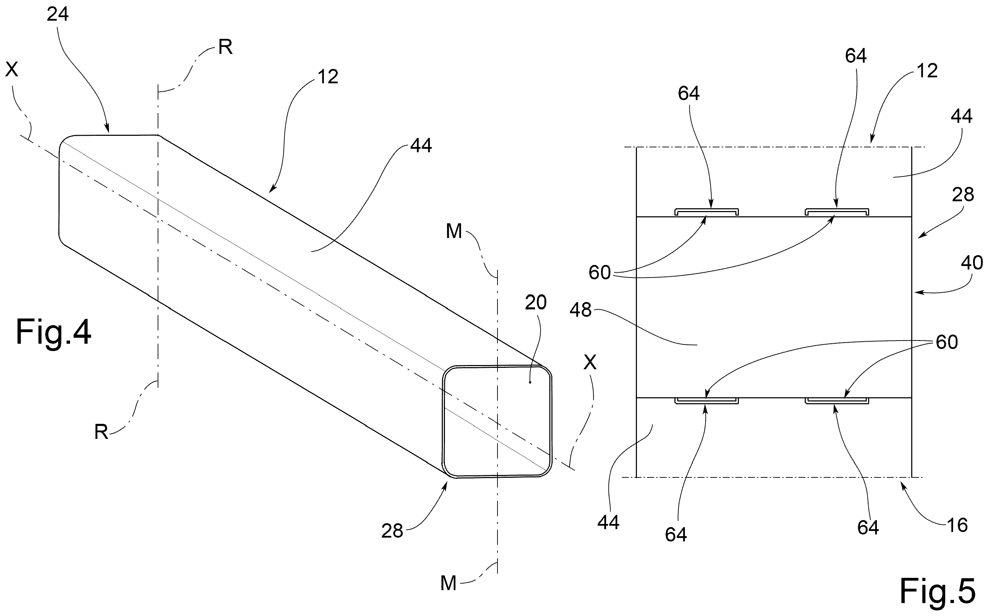

Figure 4 depicts a perspective view of a part of the tube container for vehicles in Figure 1;
Figure 5 depicts a top view of the tube container for vehicles in Figure 1, from the side of the arrow V indicated in Figure 3;

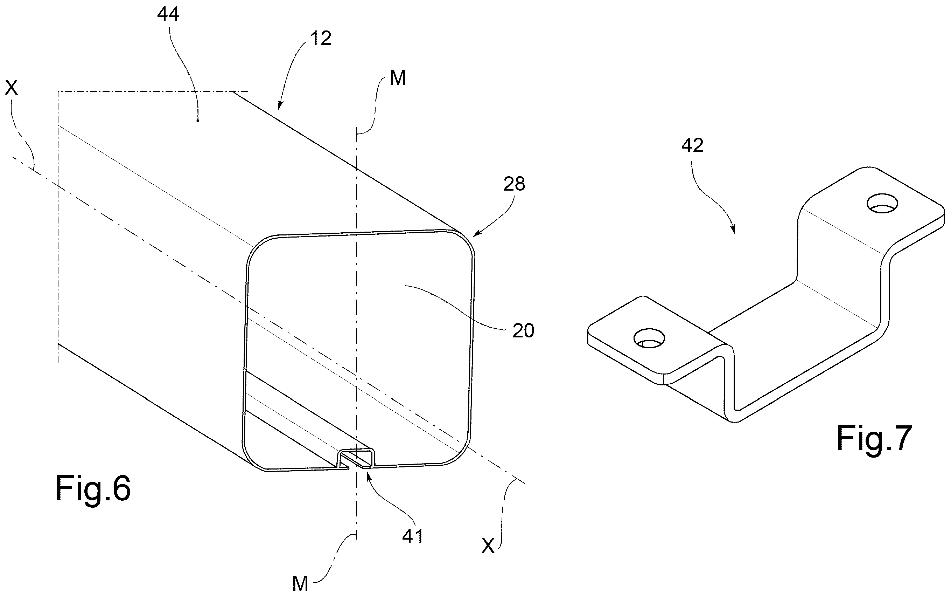

Figure 6 depicts a perspective view of a part of a tube container for vehicles according to a further embodiment of the present invention;
Figure 7 depicts a perspective view of a bracket for assembling the tube container in Figure 6;

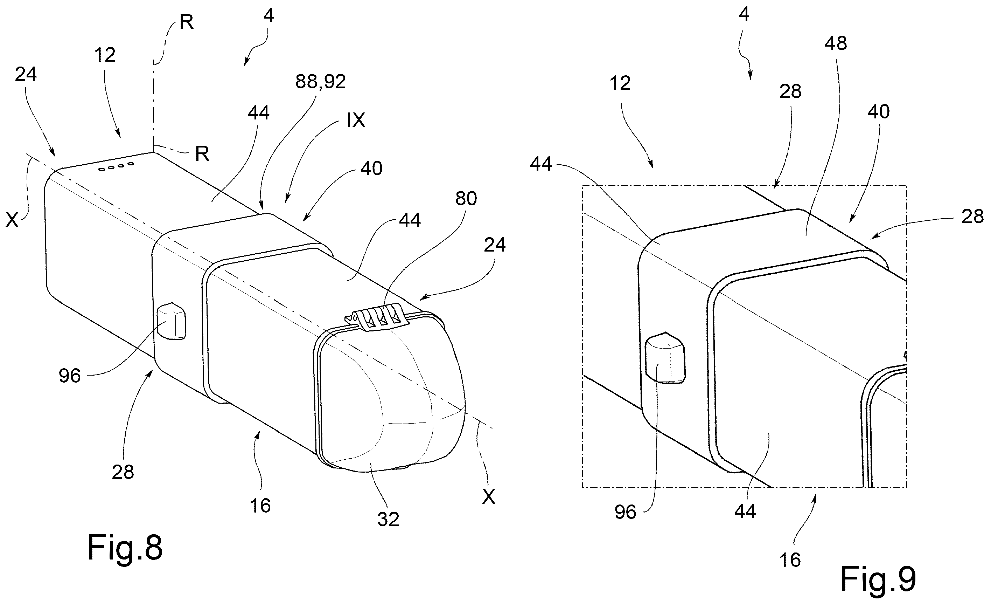

Figure 8 depicts a perspective view of a tube container according to a further embodiment of the present invention;
Figure 9 depicts the enlarged detail IX indicated in Figure 8;

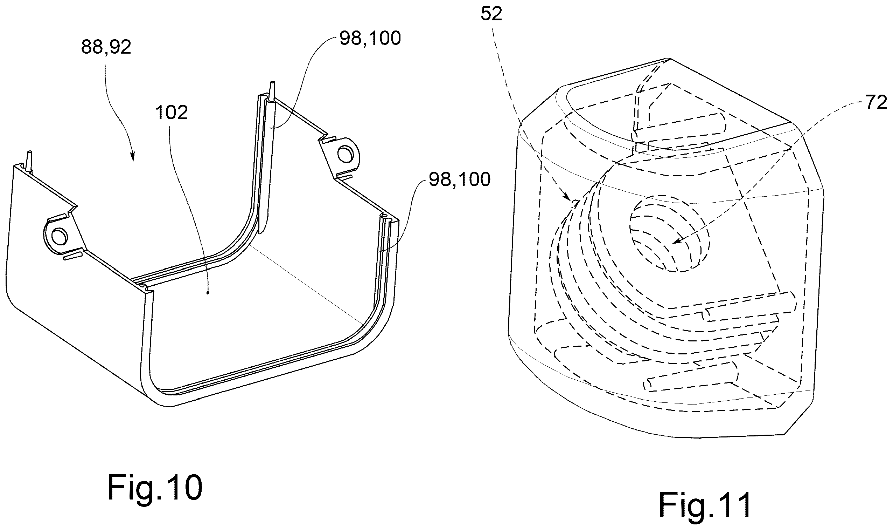

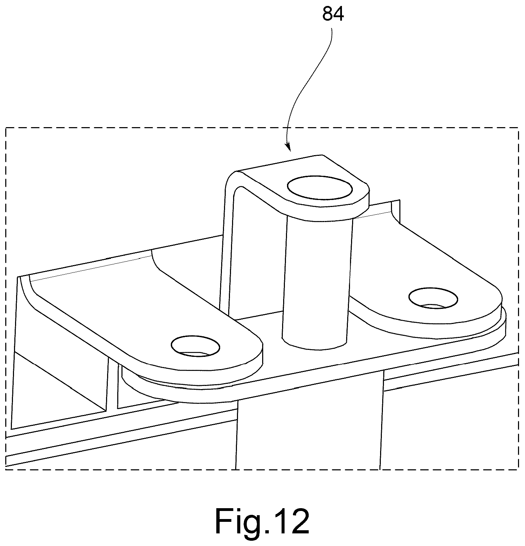

Figures 10-12 depict enlarged details of the tube container in Figure 8.

The elements or parts of elements common to the embodiments described below will be indicated by the same reference numerals.

### DETAILED DESCRIPTION

With reference to the above figures, the number 4 indicates as a whole a tube container for vehicles comprising a hollow device body which delimits a containment compartment 8 for objects.

In particular, the tube container 4 preferably contains elongated objects, such as tubes but not only. In any case, the type of objects contained in the containment compartment 8 is only indicative and not limiting for the purposes of the present invention.

The tube container 4 for vehicles comprises a first hollow part 12 and a second hollow part 16, provided with an inner side wall 20 peripherally closed so as to delimit a containment compartment 8 for objects.

The first part 12 and the second part 16 each extend along a main longitudinal direction X-X from a cantilevered free end 24 to an inner end 28 opposite to said free end 24. Said first part 12 and second part 16 have a centerline plane M-M parallel to said main longitudinal direction X-X. Preferably, said centerline plane M-M is also a plane of symmetry for the tube container 4. The inner ends 28 are open so as to create the single containment compartment 8 seamlessly between the first part 12 and the second part 16.

The parts 12, 16 can be made of either metal or plastic/polymer material.

A closing lid 32 is associated with the free end 24 of at least one of said parts 12,16, openable so as to allow access to the containment compartment 8, through an access threshold 36 thereof. Typically, at least one closing lid 32 is instead of the fixed type.

The inner ends 28 of said parts 12,16 directly face and are connected to each other by means of at least one joining collar 40, so as to create a single device body, parallel to said main longitudinal direction X-X.

According to an embodiment, at least one of said parts 12, 16 has a longitudinal bottom slit 41, arranged parallel to the main longitudinal direction X-X. In particular, said longitudinal bottom slit 41 facilitates the assembly of the tube container on a luggage rack of an associable vehicle due to the interposition of at least one Omega bracket 42 which fits into said longitudinal bottom slit 41.

In particular, the joining collar 40 is superimposed on the inner ends 28 of the parts 12,16 and on an outer side wall 44 opposite to the inner side wall 20 of the parts 12,16.

Preferably, said joining collar 40 comprises two half-shells 48 connected to each other at opposing bases 52 oriented, with respect to a projection plane parallel to said centerline plane M-M, according to an inclined direction forming an acute angle 56 with the main longitudinal direction X-X. As better described below, the presence of this angle allows obtaining, by bringing the two half-shells 48 closer and tightening them together, both an axial compressive force between the two parts parallel to the main longitudinal direction X-X, and a radial compressive force, along a radial direction, parallel to the centerline plane M-M and perpendicular to the main longitudinal direction X-X.

According to an embodiment, said acute angle 56 is an angle between 40 and 50 sexagesimal degrees, preferably equal to 45 sexagesimal degrees.

According to an embodiment, each half-shell 48 comprises at least one folded flap 60 inserted at least partially into a corresponding seat 64 obtained on said outer side wall 44 of each inner end 28 of said first part 12 and second part 16.

Preferably, said seat 64 is blind, i.e., it is not a through seat and thus not communicating with the containment compartment 8. It is also possible to provide an embodiment in which said seat is a through seat in communication with the containment compartment 8.

For example, said folded flap 60 identifies an angle of about 90 sexagesimal degrees with the corresponding half-shell 48.

Preferably, threaded connection means 68, such as screws or bolts, are provided at said bases 52 for closing said half-shells so as to vary both the tightening torque between the half-shells 48 and the compressive force between said first part 12 and second part 16 as a function of the torquing of said screws or bolts. The threaded connection means 68 pass through appropriate fixing holes 72 obtained on said bases 52.

Preferably, said half-shells 48 are made of steel.

According to an embodiment, at said at least one free end 24 provided with a closing lid 32, there is an inner anti-breakthrough plate 76 which internally covers said free end 24 on the side of the inner side wall 20. For example, the inner anti-breakthrough plate 76 is a steel ring.

According to an embodiment, said free end 24 equipped with a closing lid 32 is provided with an incorporated half-hinge 80 to allow the closing lid 32 to be opened/closed.

According to an embodiment, the closing lid 32 is provided with a closing lock 84.

Preferably, said closing lock 84 is a lock of the push-button type.

According to an embodiment, a plastic cover 88 is provided to cover the joining collar 40.

According to an embodiment, said plastic cover 88 comprises a pair of half-lids 92 associated with each other by means of an interlocking and/or snap-fit form coupling.

For example, said half-lids 92 comprise a pair of hollow protuberances 96 counter-shaped with respect to the bases 52, to cover the latter.

According to an embodiment, said protuberances 96 are shaped so as to house and conceal the bases 52 and the threaded connection means 68 thereof, such as screws or bolts.

According to an embodiment, said half-lids 92 are provided with peripheral gaskets 98 arranged upstream and downstream of the inner ends 28 of said parts 12,16.

According to an embodiment, said peripheral gaskets 98 are housed within peripheral seats 100 obtained on an inner wall 102 of said half-lids 92 facing the outer side wall 44 of the parts 12,16.

Due to the radial tightening of the half-lids 92 it is thus possible to compress the peripheral gaskets 98 against the outer side wall of the parts 12,16.

The peripheral gaskets run along the entire outer periphery of the inner ends 28 of the parts 12,16 so as to form a seal for the containment compartment 8.

As can be appreciated from the above description, the present invention allows overcoming the drawbacks introduced in the prior art.

In fact, the present invention allows withstanding atmospheric agents, ensuring the required hermeticity over time, in particular avoiding possible infiltrations of water into the containment compartment.

Furthermore, the tube container is solid, equipped with adequate sealing gaskets, and due to the joining collar, does not include rivets or through holes passing through the walls and directly exposed to the outside of the device, as in many solutions of the prior art; such rivets or through holes are in fact the cause of water infiltration in the long run.

Moreover, the connection provided by the joining collar is particularly mechanically resistant.

In particular, the provision of inclined bases allows, by tightening the threaded connection means, both compressing the two parts axially together along the main longitudinal direction X-X, and compressing the two half-shells radially. Also due to the mechanical connection between the folded flaps and the blind seats, the joining collar is capable of ensuring a stable and safe mechanical connection.

Moreover, the present invention is inexpensive and versatile to manufacture and assemble. In particular, unlike some solutions of the prior art, the overall assembly time is reduced as the pre-assembly of said half-shells on the parts is not required.

Furthermore, the solution of the present invention is aesthetically superior to the prior art solutions as the folded flaps that fit into the blind seats ensure a more precise alignment between the parts. In addition, the present invention allows connecting together several parts typically obtained by extrusion; the fact that the parts have a reduced longitudinal extension allows obtaining more dimensionally precise components, which are thus easier to align and assemble.

On the one hand, the joining collar forms a structural stiffening element, and on the other hand it ensures the seal by virtue of the provision of sealing gaskets, conveniently pressed against the outer side wall of the parts.

In any case, the longitudinal extension of the joining collar of the present invention is highly reduced compared to the longitudinal extension of the prior art solutions, precisely by virtue of the presence of the mechanical connections between the folded flaps and the blind seats, which significantly contribute to the overall structural rigidity of the device.

In other words, due to the presence of mechanical connections that align and stiffen the connection between the parts, it is possible to use a joining collar with fairly limited longitudinal dimensions.

In order to meet contingent, specific needs, those skilled in the art may make several changes and variations to the solutions described above.

The scope of protection of the present invention is defined by the following claims.

### REFERENCE SIGNS

- 4:: tube container
- 8:: containment compartment
- 12:: first part
- 16:: second part
- 20:: inner side wall
- 24:: free end
- 28:: inner end
- 32:: closing lid
- 36:: access threshold
- 40:: joining collar
- 41:: longitudinal bottom slit
- 42:: Omega bracket
- 44:: outer side wall
- 48:: half-shells
- 52:: bases
- 56:: acute angle
- 60:: folded flap
- 64:: seat
- 68:: threaded connection means
- 72:: fixing holes
- 76:: inner anti-breakthrough plate
- 80:: half-hinge
- 84:: closing lock
- 88:: plastic cover
- 92:: half-lid
- 96:: protuberances
- 98:: peripheral gaskets
- 100:: peripheral seats
- 102:: inner wall
- X-X:: main longitudinal direction
- M-M:: centerline plane
- R-R: radial direction

## Claims

1. A tube container (4) for vehicles comprising
- a first part (12) and a second part (16), both hollow, provided with an inner side wall (20) peripherally closed so as to delimit a containment compartment (8) for objects, said first part (12) and second part (16) each extending along a main longitudinal direction (X-X) from a cantilevered free end (24) to an inner end (28) opposite to said free end (24), and having a centerline plane (M-M) parallel to said main longitudinal direction (X-X)
- a closing lid (32), associated with the free end (24) of at least one of said parts (12,16), openable so as to allow access to the containment compartment (8), through an access threshold (36) thereof,
- the inner ends (28) of said parts (12,16) directly facing and being connected to each other by means of at least one joining collar (40), so as to create a single device body, parallel to said main longitudinal direction (X-X), the joining collar (40) being superimposed on the inner ends (28) of the parts (12,16) and on an outer side wall (44) opposite to the inner side wall (20) of the parts (12,16),
- wherein said joining collar (40) comprises two half-shells (48) connected to each other at opposing bases (52) oriented, with respect to a projection plane parallel to said centerline plane (M-M), according to an inclined direction forming an acute angle (56) with the main longitudinal direction (X-X).

2. A tube container (4) according to claim 1, wherein said acute angle (56) is an angle between 40 and 50 sexagesimal degrees, preferably equal to 45 sexagesimal degrees.

3. A tube container (4) according to claim 1 or 2, wherein each half-shell (48) comprises at least one folded flap (60) inserted at least partially into a corresponding seat (64) obtained on said outer side wall (44) of each inner end (28) of said first part (12) and second part (16) .

4. A tube container (4) according to claim 3, wherein said folded flap (60) identifies an angle of about 90 sexagesimal degrees with the corresponding half-shell (48).

5. A tube container (4) according to claim 1, 2, 3 or 4, wherein threaded connection means (68), such as screws or bolts, are provided at said bases (52) for closing said half-shells (48) so as to vary both the tightening torque between the half-shells (48) and the compressive force between said first part (12) and second part (16) as a function of the torquing of said screws or bolts.

6. A tube container (4) according to any one of claims 1 to 5, wherein said half-shells (48) are made of steel.

7. A tube container (4) according to any one of claims 1 to 6, wherein, at said at least one free end (24) provided with a closing lid (32), is provided an inner anti-breakthrough plate (76) which internally covers said free end (24) on the side of the inner side wall (20).

8. A tube container (4) according to any one of claims 1 to 7, wherein said free end (24) equipped with a closing lid (32) is provided with an incorporated half-hinge (80) to allow the closing lid (32) to be opened/closed.

9. A tube container (4) according to any one of claims 1 to 8, wherein the closing lid (32) is provided with a closing lock (84).

10. A tube container (4) according to any one of claims 1 to 9, wherein a plastic cover (88) is provided to cover the joining collar (40), wherein said plastic cover (88) comprises a pair of half-lids (92) associated with each other by means of an interlocking and/or snap-fit form coupling.

11. A tube container (4) according to claim 10, wherein said half-lids (92) comprise a pair of hollow protuberances (96) counter-shaped with respect to the bases (52), to cover the latter.

12. A tube container (4) according to claim 11, wherein said protuberances (96) are shaped so as to house and conceal the bases (52) and the threaded connection means (68) thereof, such as screws or bolts.

13. A tube container (4) according to claim 10, 11 or 12, wherein said half-lids (92) are provided with peripheral gaskets (98) arranged upstream and downstream of the inner ends (28) of said parts (12,16).

14. A tube container (4) according to claim 13, wherein said peripheral gaskets (98) are housed within peripheral seats (100) obtained on an inner wall (102) of said half-lids (92) facing the outer side wall (44) of the parts (12,16).

15. A tube container (4) according to any one of claims 1 to 14, wherein at least one of said parts (12,16) has a longitudinal bottom slit (41), arranged parallel to the main longitudinal direction (X-X), shaped to facilitate the assembly of the tube container (4) on a luggage rack of an associable vehicle due to the interposition of at least one Omega bracket (42).

## Patentansprüche

1. Rohrbehälter (4) für Fahrzeuge, umfassend
- einen ersten Teil (12) und einen zweiten Teil (16), beide hohl, die mit einer peripher geschlossenen inneren Seitenwand (20) versehen sind, um ein Aufnahmefach (8) für Gegenstände abzugrenzen, wobei sich der erste Teil (12) und der zweite Teil (16) jeweils entlang einer Hauptlängsrichtung (X-X) von einem auskragenden freien Ende (24) zu einem dem freien Ende (24) gegenüberliegenden inneren Ende (28) erstrecken und eine Mittellinienebene (M-M) parallel zu der Hauptlängsrichtung (X-X) aufweisen,
- einen Verschlussdeckel (32), der dem freien Ende (24) mindestens eines der Teile (12, 16) zugeordnet ist und geöffnet werden kann, um den Zugang zum Aufnahmefach (8) durch eine Zugangsschwelle (36) davon zu ermöglichen,
- wobei die inneren Enden (28) der Teile (12, 16) direkt einander zugewandt sind und mittels mindestens einer Verbindungsmanschette (40) miteinander verbunden sind, um einen einzigen Vorrichtungskörper parallel zur Hauptlängsrichtung (X-X) zu bilden, wobei die Verbindungsmanschette (40) die inneren Enden (28) der Teile (12, 16) und eine der inneren Seitenwand (20) der Teile (12, 16) gegenüberliegende äußere Seitenwand (44) überlagert,
- wobei die Verbindungsmanschette (40) zwei Halbschalen (48) umfasst, die an gegenüberliegenden Basen (52) miteinander verbunden sind, welche in Bezug auf eine Projektionsebene parallel zur Mittellinienebene (M-M) gemäß einer geneigten Richtung ausgerichtet sind, die einen spitzen Winkel (56) mit der Hauptlängsrichtung (X-X) bildet.

2. Rohrbehälter (4) nach Anspruch 1, wobei der spitze Winkel (56) ein Winkel zwischen 40 und 50 Sexagesimalgraden ist, vorzugsweise gleich 45 Sexagesimalgraden.

3. Rohrbehälter (4) nach Anspruch 1 oder 2, wobei jede Halbschale (48) mindestens eine gefaltete Lasche (60) umfasst, die zumindest teilweise in einen entsprechenden Sitz (64) eingesetzt ist, der an der äußeren Seitenwand (44) jedes inneren Endes (28) des ersten Teils (12) und des zweiten Teils (16) ausgebildet ist.

4. Rohrbehälter (4) nach Anspruch 3, wobei die gefaltete Lasche (60) einen Winkel von etwa 90 Sexagesimalgraden mit der entsprechenden Halbschale (48) definiert.

5. Rohrbehälter (4) nach Anspruch 1, 2, 3 oder 4, wobei Gewindeverbindungsmittel (68), wie Schrauben oder Bolzen, an den Basen (52) zum Schließen der Halbschalen (48) vorgesehen sind, um sowohl das Anzugsmoment zwischen den Halbschalen (48) als auch die Druckkraft zwischen dem ersten Teil (12) und dem zweiten Teil (16) in Abhängigkeit vom Anziehen der Schrauben oder Bolzen zu variieren.

6. Rohrbehälter (4) nach einem der Ansprüche 1 bis 5, wobei die Halbschalen (48) aus Stahl hergestellt sind.

7. Rohrbehälter (4) nach einem der Ansprüche 1 bis 6, wobei an dem mindestens einen freien Ende (24), das mit einem Verschlussdeckel (32) versehen ist, eine innere Durchbruchschutzplatte (76) vorgesehen ist, welche das freie Ende (24) auf der Seite der inneren Seitenwand (20) innen abdeckt.

8. Rohrbehälter (4) nach einem der Ansprüche 1 bis 7, wobei das mit einem Verschlussdeckel (32) ausgestattete freie Ende (24) mit einem integrierten Scharnierteil (80) versehen ist, um das Öffnen/Schließen des Verschlussdeckels (32) zu ermöglichen.

9. Rohrbehälter (4) nach einem der Ansprüche 1 bis 8, wobei der Verschlussdeckel (32) mit einem Verschlussschloss (84) versehen ist.

10. Rohrbehälter (4) nach einem der Ansprüche 1 bis 9, wobei eine Kunststoffabdeckung (88) zum Abdecken der Verbindungsmanschette (40) vorgesehen ist, wobei die Kunststoffabdeckung (88) ein Paar Halbdeckel (92) umfasst, die mittels einer formschlüssigen und/oder kraftschlüssigen Verbindung miteinander verbunden sind.

11. Rohrbehälter (4) nach Anspruch 10, wobei die Halbdeckel (92) ein Paar hohle Vorsprünge (96) umfassen, die in Bezug auf die Basen (52) gegengeformt sind, um Letztere abzudecken.

12. Rohrbehälter (4) nach Anspruch 11, wobei die Vorsprünge (96) so geformt sind, dass sie die Basen (52) und deren Gewindeverbindungsmittel (68), wie Schrauben oder Bolzen, aufnehmen und verbergen.

13. Rohrbehälter (4) nach Anspruch 10, 11 oder 12, wobei die Halbdeckel (92) mit Umfangsdichtungen (98) versehen sind, die stromaufwärts und stromabwärts der inneren Enden (28) der Teile (12, 16) angeordnet sind.

14. Rohrbehälter (4) nach Anspruch 13, wobei die Umfangsdichtungen (98) in Umfangssitzen (100) untergebracht sind, die an einer inneren Wand (102) der Halbdeckel (92) ausgebildet sind, welche der äußeren Seitenwand (44) der Teile (12, 16) zugewandt ist.

15. Rohrbehälter (4) nach einem der Ansprüche 1 bis 14, wobei mindestens einer der Teile (12, 16) einen längs verlaufenden Bodenschlitz (41) aufweist, der parallel zur Hauptlängsrichtung (X-X) angeordnet und so geformt ist, dass er die Montage des Rohrbehälters (4) auf einem Gepäckträger eines zuordenbaren Fahrzeugs durch das Zwischenschalten mindestens einer Omega-Halterung (42) erleichtert.

## Revendications

1. Un conteneur tubulaire (4) pour véhicules comprenant
- une première partie (12) et une seconde partie (16), toutes deux creuses, pourvues d'une paroi latérale intérieure (20) fermée sur son pourtour de manière à délimiter un compartiment de rangement (8) pour des objets, lesdites première partie (12) et seconde partie (16) s'étendant chacune le long d'une direction longitudinale principale (X-X) depuis une extrémité libre en porte-à-faux (24) jusqu'à une extrémité intérieure (28) opposée à ladite extrémité libre (24), et présentant un plan médian (M-M) parallèle à ladite direction longitudinale principale (X-X)
- un couvercle de fermeture (32), associé à l'extrémité libre (24) d'au moins une desdites parties (12,16), pouvant d'ouvrir de manière à permettre l'accès au compartiment de rangement (8), par l'intermédiaire d'un seuil d'accès (36) de celui-ci,
- les extrémités intérieures (28) desdites parties (12,16) se faisant directement face et étant reliées entre elles au moyen d'au moins un collier de jonction (40), de manière à former un seul corps de dispositif, parallèle à ladite direction longitudinale principale (X-X), le collier de jonction (40) venant se superposer aux extrémités intérieures (28) des parties (12,16) et à une paroi latérale extérieure (44) opposée à la paroi latérale intérieure (20) des parties (12,16),
- dans lequel ledit collier de jonction (40) comprend deux demi-coques (48) reliées entre elles au niveau de bases opposées (52) orientées, par rapport à un plan de projection parallèle audit plan de la ligne centrale (M-M), selon une direction inclinée formant un angle aigu (56) avec la direction longitudinale principale (X-X).

2. Un conteneur tubulaire (4) selon la revendication 1, dans lequel ledit angle aigu (56) est un angle compris entre 40 et 50 degrés sexagésimaux, de préférence égal à 45 degrés sexagésimaux.

3. Un conteneur tubulaire (4) selon la revendication 1 ou 2, dans lequel chaque demi-coque (48) comprend au moins un rabat replié (60) inséré au moins partiellement dans un logement correspondant (64) obtenu sur ladite paroi latérale extérieure (44) de chaque extrémité intérieure (28) de ladite première partie (12) et de ladite deuxième partie (16).

4. Un conteneur tubulaire (4) selon la revendication 3, dans lequel ledit rabat replié (60) forme un angle d'environ 90 degrés sexagésimaux avec la demi-coque correspondante (48).

5. Un conteneur tubulaire (4) selon la revendication 1, 2, 3 ou 4, dans lequel des moyens de raccordement filetés (68), tels que des vis ou des boulons, sont prévus au niveau desdites bases (52) pour fermer lesdites demi-coques (48), afin de faire varier à la fois le couple de serrage entre les demi-coques (48) et la force de compression entre ladite première partie (12) et la seconde partie (16) en fonction du serrage au couple desdites vis ou desdits boulons.

6. Un conteneur tubulaire (4) selon l'une quelconque des revendications 1 à 5, dans lequel lesdites demi-coques (48) sont en acier.

7. Un conteneur tubulaire (4) selon l'une quelconque des revendications 1 à 6, dans lequel, au niveau d'au moins une extrémité libre (24) munie d'un couvercle de fermeture (32), est prévue une plaque anti-perforation intérieure (76), qui recouvre intérieurement ladite extrémité libre (24) du côté de la paroi latérale intérieure (20).

8. Un conteneur tubulaire (4) selon l'une quelconque des revendications 1 à 7, dans lequel ladite extrémité libre (24), munie d'un couvercle de fermeture (32), est pourvue d'une demi-charnière intégrée (80) permettant d'ouvrir et de fermer le couvercle de fermeture (32).

9. Un conteneur tubulaire (4) selon l'une quelconque des revendications 1 à 8, dans lequel le couvercle de fermeture (32) est muni d'un verrou de fermeture (84).

10. Un conteneur tubulaire (4) selon l'une quelconque des revendications 1 à 9, dans lequel un couvercle en plastique (88) est prévu pour recouvrir le collier de jonction (40), ledit couvercle en plastique (88) comprenant une paire de demi-couvercles (92) associés l'un à l'autre au moyen d'un couplage par emboîtement et/ou par encliquetage.

11. Un conteneur tubulaire (4) selon la revendication 10, dans lequel lesdits demi-couvercles (92) comprennent une paire de protubérances creuses (96) de forme complémentaire à celle des bases (52), afin de recouvrir ces dernières.

12. Un conteneur tubulaire (4) selon la revendication 11, dans lequel lesdites protubérances (96) sont façonnées de manière à loger et à dissimuler les bases (52) et les moyens de raccordement filetés (68), tels que des vis ou des boulons.

13. Un conteneur tubulaire (4) selon la revendication 10, 11 ou 12, dans lequel lesdits demi-couvercles (92) sont munis de joints périphériques (98) disposés en amont et en aval des extrémités intérieures (28) desdites parties (12,16).

14. Un conteneur tubulaire (4) selon la revendication 13, dans lequel lesdits joints périphériques (98) sont logés dans des logements périphériques (100) obtenus sur une paroi intérieure (102) desdits demi-couvercles (92) faisant face à la paroi latérale extérieure (44) des parties (12,16).

15. Un conteneur tubulaire (4) selon l'une quelconque des revendications 1 à 14, dans lequel au moins une desdites parties (12,16) comporte une fente longitudinale inférieure (41), disposée parallèlement à la direction longitudinale principale (X-X), façonnée de manière à faciliter l'assemblage du conteneur tubulaire (4) sur un porte-bagages d'un véhicule associable grâce à l'interposition d'au moins un support en oméga (42).
